# EUROPEAN PATENT SPECIFICATION

(11) **EP 1 368 442 B1**
(45) Date of publication and mention of the grant of the patent: **08.02.2006**
(21) Application number: 02700638.6
(22) Date of filing: 20.02.2002
(51) Int. Cl.: C09J 7/02

(54) **PRESSURE-SENSITIVE ADHESIVE TAPE FOR FIXING WINDING OF CAPACITOR ELEMENT**
DRUCKEMPFINDLICHES KLEBEBAND ZUM FIXIEREN DER WICKLUNG EINES KONDENSATORELEMENTS
RUBAN ADHESIF AUTOCOLLANT PERMETTANT DE FIXER L'ENROULEMENT D'UN ELEMENT CONDENSATEUR

(30) Priority: 22.02.2001 JP 2001046184
(43) Date of publication of application: 10.12.2003
(73) Proprietor: NITTO DENKO CORPORATION, Ibaraki-shi, Osaka 567-0041 (JP)
(72) Inventor: TANIMOTO, Masakazu, Ibaraki-shi, Osaka 567-0041 (JP)
(74) Representative: Grünecker, Kinkeldey, Stockmair & Schwanhäusser Anwaltssozietät
(86) International application number: PCT/JP2002/001495
(87) International publication number: WO 2002/066569

(56) References cited:
- EP-A- 0 107 468
- EP-A- 0 255 866
- PATENT ABSTRACTS OF JAPAN vol. 014, no. 202 (C-0713), 25 April 1990 (1990-04-25) & JP 02 041382 A (TORAY IND INC), 9 February 1990 (1990-02-09)
- DATABASE WPI Section Ch, Week 198934 Derwent Publications Ltd., London, GB; Class A14, AN 1989-245399 XP002209770 & JP 01 178574 A (NITTO DENKO CORP), 14 July 1989 (1989-07-14)
- DATABASE WPI Section Ch, Week 199518 Derwent Publications Ltd., London, GB; Class A14, AN 1995-137099 XP002209771 & JP 07 062302 A (NITTO DENKO CORP), 7 March 1995 (1995-03-07)

## Description

The present invention relates to a pressure-sensitive adhesive tape for fixing the winding of a capacitor element which is adapted to be wound on the periphery of a capacitor element. More particularly, the invention relates to a pressure-sensitive adhesive tape for fixing the winding of a capacitor element which is adapted to prevent the loosening of the end of winding of a surface-oxidized aluminum foil and an electrolytic paper or separator in a wet or dry aluminum electrolytic capacitor.

A wet or dry coiled aluminum electrolytic capacitor comprises a capacitor element inserted in an aluminum can (metallic case) with an electrolyte, wherein the capacitor element is obtained by winding an aluminum foil (electrode foil) which has been etched or oxidized on the surface thereof with an electrolytic papermade of Manila hemp or the like or separator laminated thereon. The outermost layer of the laminate may be the electrode foil or the electrolytic paper or separator.

As a method for preventing the loosening of the end of winding of such a capacitor element there has been heretofore used a method which comprises applying an adhesive directly to the outermost layer electrolytic paper or separator to bond and fix the winding of the capacitor element or a method which comprises sticking a pressure-sensitive adhesive tape having a width substantially equal to the height of the capacitor element over the periphery of the capacitor element or more such that the crosswise range of the pressure-sensitive adhesive tape coincides the height of the capacitor element. As such a pressure-sensitive adhesive tape for fixing the winding of a capacitor element there is mainly used a pressure-sensitive adhesive tape comprising as a supporting base material a biaxially stretched polyethylene terephthalate (PET), polypropylene (PP), polyphenylene sulfide (PPS) or the like or a pressure-sensitive adhesive tape comprising as a supporting base material an unstretched polyimide (PI) or polyetherimide (PEI).

On the other hand, an electrolytic capacitor is required to have heat resistance. For example, a wet aluminum electrolytic capacitor guaranteed for high-temperature use is required to withstand 150°C. The recent demand is for more surface packaging (mounting) chip parts to withstand a temperature of not lower than 250°C developed at solder reflow which has recently more often be effected at a raised solder melting temperature due to deleading. Thus, the pressure-sensitive adhesive tape for use in the fixing of winding of a capacitor element is required to withstand the load temperature applied to the capacitor element. Further, a dry aluminum electrolytic capacitor is subj ected to heat treatment at a temperature of not lower than 250°C at a step of carbonizing the electrolytic paper or separator during the preparation thereof. Accordingly, a dry aluminum electrolytic capacitor, too, is required to withstand high temperature.

JP-A-2041382 discloses a biaxially oriented polypropylene film for tacky tape. EP-A-107468 teaches a polyethylene-terephthalate-backed adhesive tape of extreme dimensional stability. EP-A-255866 discloses a pressure-sensitive adhesive tape comprising an uniaxially stretched plastic film and an adhesive layer provided on at least one side of the stretched plastic film.

However, the pressure-sensitive adhesive tape of the related art for fixing the winding of a capacitor element comprising a biaxially stretched plastic film as a substrate is disadvantageous in that when exposed to a temperature of not lower than the glass transition point (Tg) of the resin constituting the plastic film, the film shrinks in the stretching direction to cause the outermost layer electrode foil of the capacitor element to be exposed and come into contact with the metallic case such as aluminum can, causing the shortcircuiting in the capacitor element. Further, since the unstretched polyetherimide film or polyimide film is amorphous and thus suddenly loses its elasticity and softens at a temperature of higher than its glass transition point, it becomes difficult to prevent the expansion and loosening of the capacitor element when heated. Moreover, the unstretched polyimide film is expensive and thus is limited in its use.

Therefore, an object of the invention is to provide a pressure-sensitive adhesive tape for fixing the winding of a capacitor element which assures that not only the loosening of the capacitor element but also the shortcircuiting of the capacitor element can be prevented even at a temperature of not lower than the glass transition point of the resin constituting the base material film.

Another object of the invention is to provide a pressure-sensitive adhesive tape for fixing the winding of a capacitor element which can prevent the shortcircuiting of an aluminum electrolytic capacitor element guaranteed for high-temperature use when used to fix the winding thereof.

A further object of the invention is to provide a pressure-sensitive adhesive tape for fixing the winding of a capacitor element which can prevent the shortcircuiting of the capacitor element at a solder reflow during the surfacepackaging of the capacitor element.

The inventors made extensive studies of solution to these problems. As a result, it was found that the predetermination of the crosswise thermal shrinkage factor (i.e., thermal shrinkage factor in a width direction) of a pressure-sensitive adhesive tape comprisinga stretchedplastic filmas a supporting base material to not greater than a specific value makes it possible to prevent the shortcircuiting of a capacitor element while making it sure to prevent the loosening of the winding of the capacitor element. The invention has thus been worked out.

The invention provides a pressure-sensitive adhesive tape for fixing the winding of a capacitor element comprising an adhesive layer provided on at least one side of a stretched plastic film, the pressure-sensitive adhesive tape having a crosswise thermal shrinkage factor of not greater than 5% at the load temperature of the capacitor element at a temperature of 250°C, preferably up to 300°C. As such a stretched plastic film there may be used, e.g., a uniaxially stretched polypropylene film.

As the stretched plastic film to be used as a supporting base material for pressure-sensitive adhesive tape there may be used a stretched plastic film. Representative examples of such a stretched plastic film include polyester film such as polyethylene terephthalate (PET) film, polyolefin film such as polypropylene (PP) film, and polyphenylene sulfide (PPS) film.

The stretched plastic film exhibits a thermal shrinkage behavior corresponding to the draw ratio in the stretching direction at a temperature of not lower than the glass transition point (Tg) thereof. On the other hand, such a stretched plastic film is crystalline. Therefore, when the ambient temperature is not lower than the glass transition point of the plastic film but is lower than the melting point of the plastic film, the unstretched plastic film stays elastic to have capability of fixing the winding of a capacitor element. A polyethylene terephthalate (PET) film exhibits a glass transition point of 69°C and a melting point of 264°C. A polypropylene (PP) film exhibits a glass transition point of - 18°C and a melting point of 165°C. A polyphenylene sulfide (PPS) film exhibits a glass transition point of 90°C and a melting point of 285°C. When exposed to a temperature of not lower than its glass transition point, on the contrary, a stretched film doesn't shrink but suddenly loses its elasticity and thus cannot sufficiently fix the winding of a capacitor element.

In the invention, the crosswise thermal shrinkage factor of the pressure-sensitive adhesive tape is not greater than 5%, preferably not greater than 3%, more preferably not greater than 1.5% at a load temperature applied to the capacitor element (e.g., 260° (peak temperature) for 1 to 2 min in the case of a surface packaging (mounting) electronic part, or 300°C for 1 hour in the case of a solid electrolytic capacitor). This pressure-sensitive adhesive tape can be obtained by adjusting the draw ratio of the plastic film to be used as a base for pressure-sensitive adhesive tape in the direction corresponding to the crosswise direction of the tape(normally, in the direction along the width of film; TD direction). In some detail, a uniaxially stretched film obtained by stretching a plastic film only in the direction corresponding to the longitudinal direction of the tape(normally, in the direction of film flow; MD direction) or a biaxially stretched film obtained by stretching a plastic film mainly in the direction corresponding to the longitudinal direction of the tape and in the direction corresponding to the crosswise direction of the tape at a smaller draw ratio can be used as a base material film for pressure-sensitive adhesive tape to prepare an adhesive having the foregoing properties. By properly predetermining the kind of the resin constituting the plastic film, the crosswise thermal shrinkage factor of the pressure-sensitive adhesive tape can be adjusted.

Specific examples of the base material film employable herein include uniaxially stretched polypropylene film, and biaxially stretched polyester film [e.g., trade name "LCP Film", produced by SUMITOMO CHEMICAL CO., LTD.]. The foregoing biaxially stretched polyester film (trade name "LCP Film") exhibits a crosswise thermal shrinkage factor of not greater than 5% at a temperature of up to 300°C. As the base material film of the invention there is preferably used a uniaxially stretched plastic film such as uniaxially stretched polypropylene film in particular.

The thickness of the base material film may be properly predetermined so far as the working efficiency in fixing the winding of a capacitor element cannot be impaired. Inpractice, however, the thickness of the base material film is normally from about 5 µm to 100 µm, preferably from about 9 µm to 50 µm.

As the adhesive constituting the adhesive layer in the pressure-sensitive adhesive tape for fixing the winding of a capacitor element of the invention there may be used a conventional pressure-sensitive adhesive such as acrylic adhesive, rubber-based adhesive and silicone-based adhesive or the like.

As the acrylic adhesive there may be used one commonly used in pressure-sensitive adhesive tape. Preferred examples of the acrylic adhesive employable herein include a copolymer obtained by the copolymerization of (1) from 50% to 100% by weight of a main monomer ((meth)acrylic acid alkyl ester the alkyl moiety of which has from 4 to 18 carbon atoms), (2) from 0% to 50% by weight of a comonomer (e.g., (meth) acrylic acid compound, vinyl acetate and styrene having 5 or less carbon atoms) and (3) from 0% to 50% by weight of a functional group-containing monomer.

Examples of the main monomer (1) include 2-ethylhexyl (meth) acrylate, butyl (meth) acrylate, isobutyl (meth) acrylate, hexyl (meth)acrylate, octyl (meth) acrylate, isooctyl (meth) acrylate, decyl (meth) acrylate, isodecyl (meth) acrylate, lauryl (meth)acrylate, and stearyl (meth)acrylate. Examples of the (meth) acrylic acid compound having 5 or less carbon atoms as comonomer (2) include (meth) acrylic acid, methyl (meth)acrylate, acrylonitrile, and acrylamide.

Examples of the functional group-containing monomer (3) include monomer having hydroxyl group, monomer having carboxyl group, monomer having amide group, and monomer having amino group. Preferred examples of the monomer having hydroxyl group include hydroxyalkyl (meth)acrylate such as 2-hydroxyethyl (meth)acrylate and 2-hydroxypropyl (meth)acrylate. Preferred examples of the monomer having carboxyl group include monoalkylester maleate such as butyl maleate, maleic acid, maleic anhydride, and crotonic acid. Preferred examples of the monomer having amide group include alkyl (meth) acrylamide such as dimethyl acrylamide and diethyl acrylamide, alkylether methylol (meth) acrylamide such as butoxymethyl acrylamide and ethoxymethyl acrylamide, and diacetone acrylamide. Preferred examples of the monomer having amino group include dimethylaminoethyl acrylate.

As the functional group-containing monomer there may be used a polyfunctional monomer such as 1,6-hexaneglycol dimethacrylate, tetraethylene glycol diacrylate, trimethylolpropane triacrylate, divinylbenzene, divinyltoluene, diaryl phthalate, diaryl malate, diaryl adipate, diaryl glycolate, triallyl isocyanurate and diethylene glycol bisallyl carbonate.

The acrylic adhesive may comprise a tackifying polymer material such as rosin, terpene resin (e.g., α-pinene, β-pinene), terpene-phenol resin and petroleum resin, a crosslinking agent (e.g., polyol, polyamine, isocyanate) and other additives incorporated therein besides the foregoing copolymers (acrylic polymers).

As the rubber-based adhesive there maybe used an adhesive obtained by mixing a natural rubber or synthetic rubber as a main polymer with a tackifying polymer material, phenolic age resistor, metal oxide or the like as necessary.

As the silicone-based adhesive there may be used, e.g., an adhesive obtained by heat-curing a polysiloxane containing an alkyl or phenyl group such as polydimethyl siloxane, polymethylphenyl siloxane, polymethylphenyl siloxane and polydiphenyl siloxane as silicone component with a peroxide such as benzoyl peroxide or a hardening product obtained by the addition reaction of a vinyl group-containing polysiloxane with a hydrosilane.

The thickness of the adhesive layer is normally from about 2 µm to 100 µm, preferably from about 5 µm to 50 µm.

As a process for the preparation of the pressure-sensitive adhesive tape for fixing the winding of a capacitor element of the invention there may be used an ordinary process for the preparation of a pressure-sensitive adhesive tape. The pressure-sensitive adhesive tape may be prepared, e.g., by a process which comprises applying an adhesive directly to a stretched plastic film by means of a coating device such as roll coater, reverse coater, gravure coater and bar coater, and then drying the coated material or a process which comprises applying an adhesive to a release liner, drying the liner, and then transferring the adhesive layer to a stretched plastic film.

The pressure-sensitive adhesive tape for fixing the winding of a capacitor element of the invention is useful as an end stop (fixing the winding) to be wound on the periphery of an electrolytic capacitor element comprising an anode foil and a cathode foil wound with an electrolytic paper or separator interposed therebetween.

The invention will be further described hereinafter in the following examples, but the invention should not be construed as being limited thereto.

### EXAMPLE 1 (Reference Example)

As a supporting base material there was used a uniaxially stretched polypropylene film (thickness: 30 µm). To one side of the uniaxially stretchedpolypropylene film was then applied a solution obtained by dissolving a copolymer obtained by the copolymerization of an alkylester (meth)acrylate the alkyl moiety of which has from 4 to 18 carbon atoms with a vinyl-containing compound copolymerizable therewith and a crosslinking agent (e.g., polyol, polyamine, isocyanate) in a solvent. Subsequently, the coated material was heated to a temperature of 90C for 3 minutes so that the solvent was removed and the copolymer was crosslinked to form an adhesive layer (thickness: 25 µm) made of an acrylic adhesive thereon. Thus, a pressure-sensitive adhesive tape was prepared.

### EXAMPLE 2 (Reference Example)

A pressure-sensitive adhesive tape was prepared in the same manner as in Example 1 except that as the supporting base material there was used a biaxially stretched polyphenylene sulfide film [trade name "Torelina 3030", produced by TORAY INDUSTRIES, INC.] (thickness: 25 µm).

### EXAMPLE 3

A pressure-sensitive adhesive tape was prepared in the same manner as in Example 1 except that as the supporting base material there was used a biaxially stretched polyester film [trade name "LCP Film", produced by SUMITOMO CHEMICAL CO., LTD.] (thickness: 25 µm).

### COMPARATIVE EXAMPLE 1

A pressure-sensitive adhesive tape was prepared in the same manner as in Example 1 except that as the supporting base material there was used a biaxially stretched polypropylene film (thickness: 30 µm).

### COMPARATIVE EXAMPLE 2

A pressure-sensitive adhesive tape was prepared in the same manner as in Example 1 except that as the supporting base material there was used an unstretched polyetherimide film [trade name "Superio", produced by MITSUBISHI PLASTIC INDUSTRIES LTD.] (thickness: 25 µm).

### EXPERIMENT EXAMPLE 1 (Reference Example)

The pressure-sensitive adhesive tapes prepared in Examples 1 and 2 and Comparative Example 1 were each cut with a width of 2.5 mm (the direction perpendicular to the stretching direction corresponds to the crosswise direction in Example 1 while one of the stretching directions corresponds to the crosswise direction in Example 2 and Comparative Example 1). These pressure-sensitive adhesive tapes were each then wound on a steel rod having a diameter of 4 mmφ imitating a capacitor element at a load of 10 g by 1.5 turns. Thereafter, the steel rod wound with the pressure-sensitive adhesive tape was heated to a temperature of 150°C for 1 hour. The pressure-sensitive adhesive tapes were each then measured for crosswise thermal shrinkage factor. The results are set forth in Table 1 below.

**Table 1**

| Example No. | Supporting base material | Thermal shrinkage factor (150°C x 1 hr) |
|---|---|---|
| Example 1 | Uniaxially stretched polypropylene | 0.9% |
| Example 2 | Biaxially stretched polyphenylene sulfide | 0% |
| Comparative Example 1 | Biaxially stretched polypropylene | 8.3% |

As can be seen in Table 1 above, the pressure-sensitive adhesive tapes of Examples 1 and 2 exhibit a crosswise thermal shrinkage factor as low as 0.9% and 0%, respectively, even at a temperature as high as 150°C. Therefore, even when used to fix the winding of an aluminum electrolytic capacitor element guaranteed for high-temperature use, the pressure-sensitive adhesive tape of the invention causes the aluminum foil (electrode foil) to be little exposed, making it possible to prevent the shortcircuiting of the aluminum foil to the aluminum case (metallic case). On the contrary, the pressure-sensitive adhesive tape of Comparative Example 1 exhibited a thermal shrinkage factor as high as 8.3% even at a temperature as high as 150°C. When such a pressure-sensitive adhesive tape is used to fix the winding of an aluminum electrolytic capacitor element guaranteed for high-temperature use, the aluminum foil is exposed, possibly causing shortcircuiting.

### EXPERIMENT EXAMPLE 2

The pressure-sensitive adhesive tapes prepared in Example 3 and Comparative Example 2 were each wound on a steel rod in the same manner as in Experiment Example 1, heated to an ambient temperature of 270°C and 300°C for 1 hour, and then measured for crosswise shrinkage factor. The results are set forth in Table 2. In Example 3, the pressure-sensitive adhesive tape was cut with one of the stretching directions as crosswise direction.

**Table 2**

| Example No. | Supporting base material | Thermal shrinkage factor (270°C x factor 1 hr) | Thermal shrinkage (300°C x 1 hr) |
|---|---|---|---|
| Example 3 | Biaxially stretched polyester | 0.5% | 0.5% |
| Comparative Example 2 | Unstretched polyetherimide | Melted, foamed | Melted, foamed |

As can be seen in Table 2, the pressure-sensitive adhesive tape of Example 3 exhibits a crosswise thermal shrinkage factor as low as 0.5% even at a temperature as high as 300°C. Therefore, even when the pressure-sensitive adhesive tape of the invention is used to fix the winding of an electrolytic capacitor element to be surface-packaged, the aluminum foil (electrode foil) is little exposed at a solder reflow, making it possible to prevent the occurrence of shortcircuiting between the aluminum foil and the aluminum case (metallic case). On the contrary, the pressure-sensitive adhesive tape of Comparative Example 2 exhibited a remarkable drop of film elasticity and thus underwent melting and foaming at a temperature of higher than the glass transition point of the resin constituting the base material film (216°C). Thus, such a pressure-sensitive adhesive tape cannot fix the winding of an electrolytic capacitor element to be surface-packaged.

The pressure-sensitive adhesive tape for fixing the winding of a capacitor element of the invention comprises a stretched plastic film as a base material film. The pressure-sensitive adhesive tape of the invention exhibits a crosswise thermal shrinkage factor predetermined to not greater than a specific value. In this arrangement, it is assured that the loosening of the winding of a capacitor element can be prevented even at a temperature of not lower than the glass transition point of the resin constituting the base material film. Further, the shortcircuiting of the capacitor element can be prevented as well. Thus, the pressure-sensitive adhesive tape of the invention is extremely useful for aluminum electrolytic capacitor element guaranteed for high-temperature use. Moreover, the pressure-sensitive adhesive tape of the invention can prevent the shortcircuiting of the capacitor element at a solder reflow during the surface packaging thereof.

This application is based on Japanese patent application JP 2001-046184, filed February 22, 2001, the entire content of which is hereby incorporated by reference, the same as if set forth at length.

## Claims

1. A pressure-sensitive adhesive tape for fixing a winding of a capacitor element, which comprises:
a stretched plastic film; and
an adhesive layer provided on at least one side of the stretched plastic film,
wherein the pressure-sensitive adhesive tape has a thermal shrinkage factor in a width direction thereof of not greater than 5% at 250°C.

2. The pressure-sensitive adhesive tape for fixing a winding of a capacitor element according to Claim 1, wherein the stretched plastic film is a uniaxially stretched polypropylene film.

3. The pressure-sensitive adhesive tape for fixing a winding of a capacitor element according to Claim 1, wherein the stretched plastic film is selected from polyethylene terephthalate (PET) film, polypropylene (PP) film, and polyphenylene sulfide (PPS) film.

4. The pressure-sensitive adhesive tape for fixing a winding of a capacitor element according to Claim 1, wherein the pressure-sensitive adhesive tape has a thermal shrinkage factor in a width direction thereof of not greater than 5% at 300°C.

5. The pressure-sensitive adhesive tape for fixing a winding of a capacitor element according to Claim 1, wherein the stretched plastic film is a plastic film uniaxially stretched in a longitudinal direction thereof.

6. The pressure-sensitive adhesive tape for fixing a winding of a capacitor element according to Claim 1, wherein the stretched plastic film is a plastic film biaxially stretched in both of longitudinal and width directions thereof, wherein the draw ratio in the width direction is smaller than that in the longitudinal direction.

7. A capacitor comprising: a capacitor element; and a pressure-sensitive adhesive tape for fixing a winding of the capacitor element according to Claim 1.

8. Use of pressure-sensitive adhesive tape according to any of Claims 1 to 6 for fixing a winding of a capacitor element.

## Patentansprüche

1. Ein druckempfindliches Klebeband zum Fixieren einer Wicklung eines Kondensatorelements, das:
einen gestreckten Plastikfilm; und
eine Klebeschicht, die auf wenigstens einer Seite des gestreckten Plastikfilms bereit gestellt wird,
umfasst, wobei das druckempfindliche Klebeband einen thermischen Schrumpffaktor in einer Richtung der Breite davon von nicht mehr als 5 % bei 250 °C aufweist.

2. Das druckempfindliche Klebeband zum Fixieren einer Wicklung eines Kondensatorelements gemäß Anspruch 1, wobei der gestreckte Plastikfilm ein uniaxial gestreckter Polypropylenfilm ist.

3. Das druckempfindliche Klebeband zum Fixieren einer Wicklung eines Kondensatorelements gemäß Anspruch 1, wobei der gestreckte Plastikfilm aus Polyethylenterphthalat (PET)- Film, Polypropylen (PP)- Film und Polyphenylensulfid (PPS)-Film ausgewählt ist.

4. Das druckempfindliche Klebeband zum Fixieren einer Wicklung eines Kondensatorelements gemäß Anspruch 1, wobei das druckempfindliche Klebeband einen thermischen Schrumpffaktor in einer Richtung der Breite davon von nicht mehr als 5 % bei 300 °C aufweist.

5. Das druckempfindliche Klebeband zum Fixieren einer Wicklung eines Kondensatorelements gemäß Anspruch 1, wobei der gestreckte Plastikfilm ein Plastikfilm ist, der uniaxial in einer Längsrichtung davon gestreckt ist.

6. Das druckempfindliche Klebeband zum Fixieren einer Wicklung eines Kondensatorelements gemäß Anspruch 1, wobei der gestreckte Plastikfilm ein Plastikfilm ist, der biaxial sowohl in Längsrichtung wie auch in der Richtung der Breite davon gestreckt ist, wobei das Streckverhältnis in der Richtung der Breite kleiner als in der Längsrichtung ist.

7. Ein Kondensator, umfassend: ein Kondensatorelement und ein druckempfindliches Klebeband zum Fixierung einer Wicklung des Kondensatorelements gemäß Anspruch 1.

8. Verwendung eines druckempfindlichen Klebebandes gemäß einem der Ansprüche 1 bis 6 zum Fixieren einer Wicklung eines Kondensatorelements.

## Revendications

1. Bande adhésive sensible à la pression pour fixer un enroulement d'un élément condensateur, qui comprend :
un film plastique étiré ; et
une couche adhésive disposée sur au moins un côté du film plastique étiré,
laquelle bande adhésive sensible à la pression a un facteur de retrait thermique dans une direction de la largeur de celle-ci non supérieure à 5 % à 250°C.

2. Bande adhésive sensible à la pression pour fixer un enroulement d'un élément condensateur selon la revendication 1, dans laquelle le film plastique étiré est un film de polypropylène ayant subi un étirage uniaxial.

3. Bande adhésive sensible à la pression pour fixer un enroulement d'un élément condensateur selon la revendication 1, dans laquelle le film plastique étiré est choisi parmi un film de poly(téréphtalate d'éthylène) (PET), un film de polypropylène (PP), et un film de poly(sulfure de phénylène) (PPS).

4. Bande adhésive sensible à la pression pour fixer un enroulement d'un élément condensateur selon la revendication 1, laquelle bande adhésive sensible à la pression a un facteur de retrait thermique dans une direction de la largeur de celle-ci non supérieure à 5 % à 300°C.

5. Bande adhésive sensible à la pression pour fixer un enroulement d'un élément condensateur selon la revendication 1, dans laquelle le film plastique étiré est un film plastique ayant subi un étirage uniaxial dans une direction longitudinale de celui-ci.

6. Bande adhésive sensible à la pression pour fixer un enroulement d'un élément condensateur selon la revendication 1, dans laquelle le film plastique étiré est un film plastique ayant subi un étirage biaxial dans les deux directions longitudinales et de la largeur de celui-ci, dans lequel le rapport d'étirage dans la direction de la largeur est inférieur à celui dans la direction longitudinale.

7. Condensateur comprenant : un élément condensateur ; et une bande adhésive sensible à la pression pour fixer un enroulement de l'élément condensateur selon la revendication 1.

8. Utilisation d'une bande adhésive sensible à la pression selon l'une quelconque des revendications 1 à 6, pour fixer un enroulement d'un élément condensateur.
